# DEMANDE DE BREVET EUROPEEN

(11) **EP 0 604 337 A1**
(43) Date de publication de la demande: **29.06.1994**
(21) Numéro de dépôt: 93440101.9
(22) Date de dépôt: 23.12.1993
(51) Int. Cl.: B65G 1/14

(54) **Colonne à taquets mobiles pour l'empilage vertical ou horizontal, notamment d'objets sensiblement plats de relativement grandes dimensions**

(30) Priorité: 23.12.1992 FR 9215814
(71) Demandeur: HUMERY FRERES S.A., F-37110 Chateau-Renault (FR)
(72) Inventeur: Humery, Robert, F-37110 Chateau-Renault (FR)
(74) Mandataire: Mayran, Ninon, Avocat

(57) **Abrégé**

Elle comprend un profilé (1) de section en U, fermé à ses deux extrémités de façon amovible, dont les deux ailes verticales parallèles (10, 11) comportent chacune intérieurement une glissière (12, 13) apte à recevoir par coulissement une planche (4, 5) comportant régulièrement répartis des orifices ronds (40, 50) et des ouvertures (41, 51) en arc de cercle concentriques desdits orifices ronds (40, 50), deux orifices ronds (40, 50) en regard étant destinés à recevoir les extrémités d'un axe de pivotement (60) traversant transversalement un taquet (6) et deux ouvertures (41, 51) en regard étant destinées à recevoir les extrémités d'un axe de butée (61) traversant ledit taquet (6) parallèlement audit axe de pivotement (60).

## Description

La présente invention a pour objet un dispositif pour l'empilage vertical ou horizontal, destiné notamment au stockage d'objets de relativement grandes dimensions et sensiblement plats, comme par exemple les éléments constitutifs de la carrosserie d'un véhicule automobile.

On connaît déjà des dispositifs d'empilage essentiellement constitués de plusieurs colonnes dressées sur une plate-forme, chacune d'elles comportant une série de taquets montés pivotants, dont une extrémité déborde à l'extérieur desdites colonnes. Les objets à empiler sont posés chacun sur l'un des taquets de chacune des colonnes, sous leur poids les taquets s'abaissent pour prendre une position basse, ce qui a pour effet second de bloquer par pincement l'objet posé précédemment sur les taquets inférieurs.

L'enlèvement d'un objet empilé entraîne le pivotement en retour des taquets sur lesquels il reposait et le dégagement de l'objet inférieur, le pivotement desdits taquets étant généralement obtenu par gravité, ceux-ci comportant un contrepoids du côté opposé à celui sur lequel repose l'objet, au-delà de l'axe de pivotement.

Les dispositifs existants présentent plusieurs inconvénients, dont le principal est qu'ils sont fabriqués pour une utilisation particulière, la forme et les dimensions des taquets et l'espace entre deux taquets étant fixés d'origine pour l'empilage d'un type d'objet. D'autre part il existe des colonnes pour des empilages verticaux et d'autres pour des empilages horizontaux. En outre l'assemblage de leurs différents éléments constitutifs est long et malaisé, d'où un prix de revient élevé.

On connaît également, d'après le document FR-A-2.599.696, une colonne d'empilage et de stockage d'éléments de carrosserie, constituée d'un profilé de section en U, dans les ailes duquel sont emmanchés face à face et de façon démontable des éléments intercalaires, en l'occurrence des moulures de garnitures en métal léger, acier ou matière plastique, comportant chacune d'une part des orifices permettant aux axes des taquets d'y tourillonner, et d'autre part une rainure verticale destinée au maintien, avec une certaine liberté de mouvement, des broches de butée desdits taquets.

Toutefois pour modifier l'amplitude de mouvement des taquets, il convient de modifier soit les moulures de garniture, et plus particulièrement les rainures verticales, soit les broches de butée.

Or, la fabrication des moulures de garniture nécessite, pour des métaux légers ou des matières plastiques, une filière particulière, et pour de l'acier un usinage particulier, ce qui grève considérablement le coût de fabrication.

De plus, ces moulures de garniture sont particulièrement rigides, du fait qu'elles sont profilées, ce qui ne permet pas de les cintrer lors du montage d'une colonne afin de mettre en place les taquets.

La présente invention a pour but de remédier à ces inconvénients en proposant une colonne d'empilage utilisable aussi bien horizontalement que verticalement, pouvant être adaptée à l'empilage d'objets différents par le remplacement des seuls taquets, avec éventuellement modification de la distance les séparant, et autorisant en outre une modification de l'amplitude de mouvement desdits taquets.

La colonne d'empilage objet de la présente invention se caractérise essentiellement en ce qu'elle comprend un profilé, réalisé avantageusement mais non limitativement en aluminium extrudé, de section en forme de U, fermé de façon amovible à ses deux extrémités et dont les ailes latérales parallèles comportent chacune intérieurement une glissière longitudinale dans laquelle peut être introduite par glissement, à partir de l'une de ses extrémités, une planche de métal, matière plastique ou autre matériau, qui comporte, régulièrement répartis, des orifices réalisés par poinçonnage ou enlèvement de copeaux, destinés à recevoir les axes des taquets.

Conformément à l'invention, les taquets, qui peuvent être de formes et de dimensions différentes, selon les objets à empiler, comportent, débordant de part et d'autre, d'une part un axe de pivotement et d'autre part un axe de butée dont les extrémités sont destinées à être introduites dans des ouvertures en arc de cercle pratiquées dans les planches latérales, concentriques de l'orifice dans lequel est introduit l'axe de pivotement du taquet, et de dimensions variées selon le déplacement à délimiter.

Le rappel en position de repos des taquets est assuré par au moins un ressort, par exemple un ressort de torsion monté sur l'axe de pivotement, en appui sur le taquet et solidarisable à l'une des planches, ou un ressort à lame solidarisé perpendiculairement et intérieurement à la paroi du profilé qui est perpendiculaire à ses ailes parallèles.

Avantageusement, afin de faciliter l'assemblage d'une colonne d'empilage selon l'invention, les planches de maintien des taquets sont fractionnées en plusieurs éléments dont chacun comporte les orifices nécessaires au fonctionnement d'un ou de plusieurs taquets. Toutefois la planche peut être monobloc si elle est suffisamment souple.

La souplesse des planches mises en oeuvre dans le dispositif selon l'invention permet un assemblage aisé d'une colonne, du fait qu'après introduction des extrémités des planches dans les glissières du profilé en U, les parties débordantes desdites planches peuvent être aisément écartées pour la mise en place des taquets, et ce au fur et à mesure de l'introduction des planches.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en perspective partielle et en éclaté d'une colonne d'empilage selon l'invention.
- la figure 2 représente une vue en coupe transversale du même dispositif.
- la figure 3a représente une vue en perspective partielle d'un deuxième mode de réalisation des planches de maintien des taquets.
- la figure 3b représente une vue en perspective partielle d'un troisième mode de réalisation desdites planches.

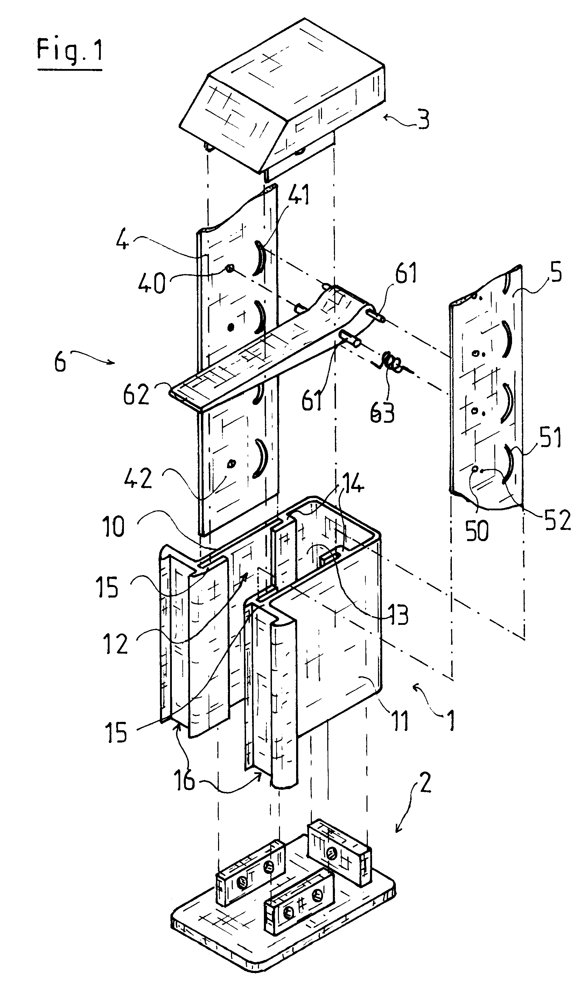

Si on se réfère à la figure 1 on peut voir qu'une colonne d'empilage selon l'invention comporte un profilé 1 solidarisable par sa base à un socle 2, lui-même solidaire ou non d'un conteneur, et par sa partie supérieure à un couvercle 3, les solidarisations du socle 2 et du couvercle 3 au profilé 1 étant réalisées par des moyens appropriés connus qui ne seront pas décrits.

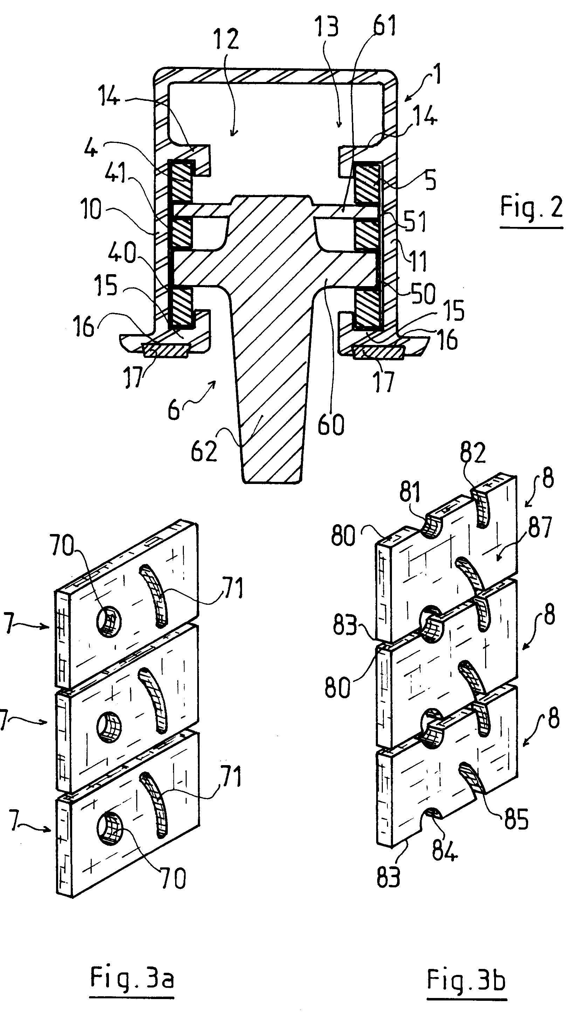

Si on se réfère également à la figure 2 on peut voir que le profilé 1 est de section en U et que ses deux ailes parallèles 10 et 11 comportent chacune, intérieurement et longitudinalement, une glissière, respectivement 12 et 13, formée de deux saillies longitudinales 14 et 15 de section en L, disposées en regard.

Dans chacune des glissières 12 et 13 est introduite par coulissement par le haut une planche, respectivement 4 et 5, comportant, régulièrement répartis, d'une part des orifices ronds, respectivement 40 et 50, et d'autre part des ouvertures en arc de cercle, respectivement 41 et 51, concentriques des orifices 40 et 50, chaque orifice 40 et chaque ouverture 41 étant en regard d'un orifice 50 et d'une ouverture 51 lorsque les planches 4 et 5 sont en place dans les glissières 12 et 13.

Deux orifices ronds 40 et 50 en regard sont destinés à recevoir les extrémités d'un axe de pivotement 60 traversant transversalement un taquet 6, et les deux ouvertures en arc de cercle 41 et 51 sont destinées à recevoir les extrémités d'un axe de butée 61 traversant le taquet 6 parallèlement à l'axe de pivotement 60.

L'axe de pivotement 60 permet le pivotement du taquet 6 par rapport au profilé 1, et l'axe de butée 61, associé aux ouvertures en arc de cercle 41 et 51, limite ce pivotement.

Afin de maintenir le taquet lorsque celui-ci est au repos en position relevée, c'est-à-dire lorsque son extrémité 62 ne déborde que de très peu à l'extérieur du profilé 1, un ressort de torsion 63 est monté sur l'axe de pivotement 60, des orifices 42 et 52 étant pratiqués dans les planches 4 et 5, à proximité des orifices 40 et 50, pour permettre le blocage des ressorts 63.

Le profilé 1 comporte également longitudinalement, à l'extrémité de chacune des ailes 10 et 11, une rainure externe 16 destinée à recevoir un cordon 17 en matière plastique souple destiné à la protection du bord des objets à empiler.

Si on se réfère maintenant à la figure 3a on peut voir que les planches 4 et 5 peuvent être fractionnées en plusieurs éléments 7, comportant chacun un orifice rond 70 destiné à recevoir l'axe de pivotement 60 d'un taquet 6 et une ouverture 71 en arc de cercle, concentrique de l'orifice 70, destinée à recevoir l'axe de butée 61 du même taquet 6.

Ce mode de réalisation permet avantageusement une mise en place plus facile des taquets 6 sur le profilé 1, par introduction un par un dans le profilé 1 d'un taquet 6 monté sur deux éléments 7.

Il convient de souligner qu'il est également possible de réaliser des éléments 7 comportant plusieurs orifices 70 et ouvertures 71 et permettant le montage de plus d'un taquet 6.

Selon un autre mode de réalisation, représenté à la figure 3b, les planches 4 et 5 sont également fractionnées en éléments 8 qui comportent chacun, d'une part dans leur bord supérieur 80 une encoche 81 demi-cylindrique et une entaille 82 en arc de cercle, et d'autre part dans leur bord inférieur 83 une encoche 84 demi-cylindrique et une entaille 85 en arc de cercle, en sorte que l'aboutement de deux éléments 8, en accolant le bord inférieur 83 de l'un et le bord supérieur 80 de l'autre, permet de reconstituer d'une part un orifice rond 86 destiné à recevoir l'axe de pivotement 60 d'un taquet 6 et d'autre part une ouverture 87 en arc de cercle destinée à recevoir l'axe de butée 61 du même taquet 6.

Ce mode de réalisation permet un assemblage encore plus aisé de la colonne d'empilage, car il suffit d'introduire dans chacune des glissières 12 et 13 un élément 8 puis de positionner un taquet 6, et d'introduire à nouveau un élément 8 et ainsi de suite, en sorte qu'il n'est pas nécessaire de réaliser l'assemblage d'un taquet 6 et de deux éléments 8 avant introduction dans les glissière 12 et 13.

L'assemblage d'une colonne d'empilage selon l'invention peut être réalisé en associant selon différentes combinaisons des planches 4 et 5, et des éléments 7 ou 8.

Une colonne d'empilage selon l'invention offre l'avantage de permettre la réalisation d'empilages différents à partir d'un profilé unique, par exemple en utilisant plusieurs taquets par objet à empiler et en mettant en oeuvre des taquets 6 et des planches 4 et 5, ou des éléments 7 ou 8 d'architectures différentes.

Il est également possible de lier le pivotement partiel d'un taquet 6 au pivotement d'un taquet 6 voisin, en reliant leurs axes de butée 61 par une biellette.

Il convient de remarquer par ailleurs qu'une colonne d'empilage selon l'invention peut être aussi bien utilisée à l'horizontale qu'à la verticale.

## Revendications

**1)** Colonne à taquets mobiles pour l'empilage vertical ou horizontal, notamment d'objets sensiblement plats de relativement grandes dimensions, comprenant un profilé (1) de section en U, fermé à ses deux extrémités de façon amovible, dont les deux ailes verticales parallèles (10, 11) comportent chacune intérieurement une glissière (12, 13) apte à recevoir en coulissement un élément intercalaire, caractérisé en ce qu'un élément intercalaire est constitué d'une planche (4, 5) comportant, régulièrement répartis, des orifices ronds (40, 50) et des ouvertures (41, 51) en arc de cercle concentriques desdits orifices ronds (40, 50), deux orifices ronds (40, 50) en regard étant destinés à recevoir les extrémités d'un axe de pivotement (60) traversant transversalement un taquet (6) et deux ouvertures (41, 51) en regard étant destinées à recevoir les extrémités d'un axe de butée (61) traversant ledit taquet (6) parallèlement audit axe de pivotement (60).

**2)** Colonne selon la revendication 1, caractérisée en ce qu'une planche (4, 5) est constituée d'une pluralité d'éléments (7) comprenant chacun au moins un orifice rond (70) et une ouverture (71) en arc de cercle.

**3)** Colonne selon la revendication 1, caractérisée en ce qu'une planche (4, 5) est constituée de l'assemblage de plusieurs éléments (8) comprenant chacun dans son bord supérieur (80) d'une part une encoche (81) demi-cylindrique et une entaille (82) en arc de cercle, et d'autre part dans son bord inférieur (83) une encoche (84) demi-cylindrique et une entaille (85) en arc de cercle, l'aboutement de deux éléments (8) par accolement du bord inférieur (83) de l'un et du bord supérieur (80) de l'autre permettant de reconstituer d'une part un orifice rond (86) destiné à recevoir l'axe de pivotement (60) d'un taquet (6) et d'autre part une ouverture (87) en arc de cercle destinée à recevoir l'axe de butée (61) dudit taquet (6).

**4)** Colonne selon l'une quelconque des revendications précédentes, caractérisée en ce que chacun des taquets (6) comporte au moins un ressort (63) de rappel monté sur son axe de pivotement (60) en vue de maintenir ledit taquet (6) en position relevée de repos.

**5)** Dispositif selon l'une quelconque des revendications précédentes, caractérisé en ce que les extrémités des ailes (10, 11) parallèles du profilé (1) comportent chacune longitudinalement, à leur face frontale une rainure (16) destinée à recevoir un cordon (17) en matière plastique souple pour la protection des objets à empiler.
